Europäisches Patentamt

(19) European Patent Office

Office européen des brevets

(11) Publication number: **0 168 956**
**B1**

(12) **EUROPEAN PATENT SPECIFICATION**

(45) Date of publication of patent specification: 04.05.88

(21) Application number: 85304181.2

(22) Date of filing: 12.06.85

(51) Int. Cl.⁴: **A 23 L 1/22,** A 23 L 2/26,
A 23 L 2/38

(54) **The method for fixing food ingredients on a magnesium salt substrate.**

(30) Priority: 15.06.84 US 621008

(43) Date of publication of application:
22.01.86 Bulletin 86/04

(45) Publication of the grant of the patent:
04.05.88 Bulletin 88/18

(84) Designated Contracting States:
AT BE CH DE FR GB LI LU NL

(56) References cited:
EP-A-0 110 170
DE-A-2 629 936
US-A-3 554 768
US-A-4 405 510

(73) Proprietor: GENERAL FOODS CORPORATION
250 North Street
White Plains, N.Y. 10625 (US)

(72) Inventor: Saleeb, Fouad Zaki
15, Gregory Place
Pleasantville New York 10570 (US)
Inventor: Mckay, Randal Peter
236, Diane Place
Paramus New Jersey 07652 (US)

(74) Representative: Baillie, Iain Cameron et al
c/o Ladas & Parry Isartorplatz 5
D-8000 München 2 (DE)

Courier Press, Leamington Spa, England.

## Description

The present invention relates to the use of magnesium salts for fixing various food ingredients including flavors, colors, juice solids, vegetable solids, spices and hygroscopic sugars. According to the present invention "fixing" or "fixation" refers to the entrapment and/or encapsulation of the food ingredient within a magnesium salt substrate in such a manner that volatile ingredients such as volatile flavorants will be retained within the substrate and non-volatile ingredients which are subject to oxidation and/or moisture pickup, such as natural juice solids, are protected against ambient atmospheric conditions.

There are numerous methods in existence to fix various food ingredients, such as volatile flavors, in edible substrates. Materials such as dextrins and hydrophilic colloids (e.g., gum arabic, gelatin, etc.) have been commonly used as these substrates.

The prior art contains many examples of fixing food ingredients such as volatile flavorants in a substrate and examples of producing dry juice solids.

U.S. Patent No. 3,554,768 to Feldman discloses forming a solution of a carbohydrate and the volatile flavorant acetaldehyde and then drying this solution such as by spray-drying.

U.S. Patent No. 3,061,444 to Rogers et al. discloses the fixation of all or a portion of a natural juice in a combination of water-soluble cyclic and acyclic dextrins by forming a solution of these materials and then drying the solution.

U.S. Patent No. 2,567,038, issued to Stevens et al. discloses a method for drying fruit juices that includes the following steps: buffering or partly neutralizing the pH of a juice with calcium carbonate or sodium citrate; pasteurizing the buffered juice; concentrating the juice to about 75% to 90% solids; improving the stability of the juice by adding ascorbic acid; adding the concentrated juice to granular sugar and drying the product by a vacuum dryer or by means of an air dryer.

U.S. Patent No. 4,112,130, issued to Gupta reveals a method for spray-drying a citrus juice comprising (a) providing an aqueous slurry including up to about 65% solids, about 50—85% of the solids being orange juice solids with the balance consisting essentially of maltodextrin and (b) concurrently spray-drying said slurry to a powder having an average moisture content of less than about 4% in a spray-dried apparatus.

## Description of the Invention

The present invention is directed to a process for fixing various food ingredients such as flavors, colors, vegetable juice solids, fruit juice solids, spices, hygroscopic carbohydrates (e.g., sugars, high D.E. dextrins, etc.) and the like, to the products produced from this fixation process and to food compositions containing the fixed food ingredients of this invention. The present invention will have utility to fix any food ingredient which is either water-soluble, water-dispersible or water-emulsifiable. According to this invention, these materials are fixed in a substrate which is comprised of and preferably consists essentially of the magnesium salts of edible monobasic, dibasic and/or tribasic acids. Suitable monobasic acids are acetic acid, propionic acid and lactic acid. Suitable dibasic acids are adipic acid, fumaric acid, malic acid, succinic acid and tartaric acid. Suitable tribasic acids are phosphoric acid and citric acid.

The material fixed in the magnesium salt will be both substantially retained in the salt and substantially protected from the effects of ambient moisture and/or oxygen. The fixation process is accomplished by mixing an aqueous solution of the magnesium salt and the ingredient or ingredients to be fixed and then drying the mixture. The mixture may be dried by any conventional drying technique such as freeze-drying, spray-drying or drum drying. In order to maximize efficiency of fixation, the more volatile the ingredient to be fixed, the lower the temperature should be during drying.

The magnesium salt present in the solution can result from either the direct addition of a magnesium salt or the addition of a basic magnesium compound (e.g., $Mg(OH)_2$, $MgO$, etc.) to an acid-containing solution such as a fruit juice, or by a combination of either of these routes. The sequence in which the various materials are added to form a mixture of the magnesium salt solution and the food ingredient or ingredients to be fixed is not critical to this invention. The prime requisite is that immediately before drying the aqueous liquid contain magnesium cation and acid anion and an ingredient which is sought to be fixed.

The amount of magnesium present should be such that, for each mole of acid contained in the solution, there should be from at least 0.3 moles of magnesium present in solution. It is speculated that the dried magnesium salt is the material which forms the fixation substrate, in which event from about 0.4 to 1.5 moles, typically about 0.5 to 0.8 moles of magnesium will be present in the solution for each mole of acid present in the solution. The level of magnesium in the dry magnesium salt substrate will be from about 4 to 30% by weight.

The amount of food ingredients which may be fixed according to the process of this invention can be up to 9 parts by weight for each part by weight of added magnesium salt. This invention is highly suited for the fixation of natural juice constituents. These constituents may comprise all or part of a particular juice, may be volatile or not and may be of varying molecular structures. Because of the relatively high fix levels which can be obtained and the inherent low-calorie, non-carbohydrate nature of the magnesium salt substrate, the fixed food ingredients of this invention are ideally suited for use in or as low-calorie food products. Unlike prior art processes which rely on added carbohydrates for fixation, this process is

accomplished without the addition of caloric carbohydrates.

This invention has been established to provide fixation for edible solids, for volatile flavors and flavor enhancers such as those compounds naturally found in fruits, spices and vegetables, for colorants such as the color-imparting agents or compounds naturally found in juices or extracts and for hygroscopic carbohydrate solids such as those contained in high fructose corn syrups. As will be recognized by those skilled in the art, the fixation of complex mixtures such as natural juice solids will inherently include the fixation of flavors, colors, proteins and carbohydrates at one time.

The particular edible juices or extracts which may be fixed in accordance with this invention include those of leaves, vegetables, roots, spices, fruits, meat and the like. In place of whole natural juice there may be used a more volatile portion or portions thereof, such as vacuum or steam aromas or water or oil extracts. Volatile flavors such as those found in orange water aroma, orange oil aroma and orange peel aroma are readily fixed by means of this invention. The synthetically produced counterparts of any of the volatile fractions of natural flavors (e.g., acetaldehyde) may also be fixed.

The use of sodium, potassium or calcium salts of organic or inorganic acids have not been found to be suitable as fixation substrates. Thus magnesium salts appear to be unique among the metal salts as fixatives. It is further surprising that successful fixation can be performed with as little as 10% by weight of the magnesium substrate.

### Example 1

A magnesium citrate solution was prepared by combining 12.2 pounds (5.53 kgs) of citric acid monohydrate (obtained from Pfizer, Inc., New York, New York) and 7.6 pounds (3.45 kgs) of magnesium hydroxide (U.S.P. obtained by Mallinckrodt, Inc., Paris, Kentucky) and 96.1 pounds (43.59 kgs) of water at ambient temperature. To this solution was added 146 pounds (66.22 kgs) of 58.2° Brix orange juice concentrate (obtained from Sunkist Growers, Ontario, California). Orange juice typically has a citric acid content of from 5 to 20% solids basis. The mixture was then spray-dried using a concurrent stream of air having an inlet temperature of 380°F (193.3°C) and an outlet temperature of 210°F (98.9°C) resulting in a dry free-flowing yellow powder containing about 15% (by weight) added magnesium citrate carrier and about 85% juice solids. The dry powder was readily soluble in cold water at least up to a 10% level providing all the flavor characteristics of orange juice. The powder was also useful as an ingredient in an orange-flavored powdered soft drink mix at a level of from 1% to 60% by weight as a source of natural orange flavor, color and solids.

### Example 2

An aqueous magnesium hydroxide suspension was formed by combining 13.16 pounds (5.97 kgs) of magnesium hydroxide in 76 pounds (34.47 kgs) of water at ambient temperature. To this suspension was added 193.75 pounds (87.88 kgs) of 51.6° Brix lemon juice concentrate (obtained from Sunkist Growers). This lemon juice had a citric acid content of about 60% by weight, solids basis. The solution was dried as in Example 1 producing a dry, free-flowing, bone-white powder containing about 95% juice solids and about 5% magnesium. The solution contained about 0.7 moles of magnesium for each mole of acid and the level of magnesium found in the magnesium salt substrate was about 8.5% by weight. The dry powder was readily soluble in cold water at least up to a 10% level providing all the flavor characteristics of lemon juice. The powder was useful as an ingredient in a lemon-flavored powdered soft drink mix at a level of from 1 to 70% as a source of natural lemon flavor, color and solids.

### Example 3

An aqueous magnesium citrate solution was prepared by combining 90 grams of magnesium citrate $(Mg_3 (C_6H_5O_7)_2 H_2O$ — obtained from B.D.H. Chemicals Ltd., Poole, England) and 900 grams of water. To this solution was added 840 grams of 25° Brix tomato paste (obtained from Hunt-Wesson Foods, Inc., Fullerton, California). The mixture was blended to uniformity and then spray-dried using a cross-flow stream of air having an inlet temperature of 150°C and an outlet temperature of 90°C. A dry, free-flowing, orange-red tomato powder was obtained having the natural color and flavor characteristics of tomato. The dry powder was readily soluble in water at least up to a 5% level. The dry powder was comprised of 70% tomato-solids and 30% magnesium citrate carrier. This powder is a suitable ingredient for use in a dry salad dressing mix at levels of from 5 to 25% by weight.

### Claims

1. A method of fixing food ingredients comprising the steps of:

   (a) forming an aqueous solution containing an edible salt selected from the group consisting of the magnesium salts of monobasic, dibasic and tribasic acids and combinations thereof and at least one water-soluble, water-dispersible or water-emulsifiable food ingredient; and

   (b) drying said solution to produce a dry fixed food ingredient.

2. The method of claim 1 wherein the drying is effected by freeze-drying, spray-drying or drum drying.

3. The method of claim 1 wherein the dry fixed food ingredient contains at least 10% by weight of magnesium salt.

4. The method of claim 1 wherein the molar ratio of magnesium to acid in the solution of step (a) is at least 0.3:1.

5. The method of claim 4 wherein the molar ratio is from 0.4:1 to 1.5:1.

6. The method of claim 1 wherein the magnesium comprises from 4 to 30% of the magnesium salt.

7. The method of claim 1 wherein the food ingredient comprises a volatile flavor or volatile flavor enhancer.

8. The method of claim 1 wherein the food ingredient comprises a colorant.

9. The method of claim 1 wherein the food ingredient comprises fruit or vegetable juice solids.

10. The method of claim 1 wherein the food ingredient comprises hygroscopic carbohydrates.

11. A fixed food ingredient produced by the method of claim 1.

12. A dry foodstuff containing the fixed food ingredient of claim 11.

## Patentansprüche

1. Verfahren zum Fixieren von Lebensmittelbestandteilen mit folgenden Schritten:

(a) es wird eine wäßrige Lösung hergestellt, die ein genießbares Salz enthält, das aus der Gruppe ausgewählt ist, die aus den Magnesiumsalzen der einbasischen, zweibasischen und dreibasischen Säuren und aus deren Kombinationen besteht, sowie mindestens einen in Wasser löslichen, dispergierbaren oder emulgierbaren Lebensmittelbestandteil;

(b) durch Trocknen dieser Lösung wird ein trockener, fixierter Lebensmittelbestandteil gebildet.

2. Verfahren nach Anspruch 1, dadurch gekennzeichnet, daß das Trocknen durch Gefriertrocknen, Sprühtrocknen und Trommeltrocknen bewirkt wird.

3. Verfahren nach Anspruch 1, dadurch gekennzeichnet, daß der trockene, fixierte Lebensmittelbestandteil mindestens 10 Gew.% Magnesiumsalz enthält.

4. Verfahren nach Anspruch 1, dadurch gekennzeichnet, daß das Molverhältnis Magnesium zu Säure in der Lösung des Schritts (a) mindestens 0,3:1 beträgt.

5. Verfahren nach Anspruch 4, dadurch gekennzeichnet, daß das Molverhältnis zwischen 0,4:1 und 1,5:1 beträgt.

6. Verfahren nach Anspruch 1, dadurch gekennzeichnet, daß das Magnesiumsalz 4 bis 30% Magnesium enthält.

7. Verfahren nach Anspruch 1, dadurch gekennzeichnet, daß der Lebensmittelbestandteil einen flüchtigen Geruchs- und/oder Geschmacksstoff oder einen flüchtigen Geruchs- und/oder Geschmacksverbesserer enthält.

8. Verfahren nach Anspruch 1, dadurch gekennzeichnet, daß der Lebensmittelbestandteil einen färbenden Stoff enthält.

9. Verfahren nach Anspruch 1, dadurch gekennzeichnet, daß der Lebensmittelbestandteil Obst- oder Gemüsesaftfeststoffe enthält.

10. Verfahren nach Anspruch 1, dadurch gekennzeichnet, daß der Lebensmittelbestandteil hygroskopische Kohlenhydrate enthält.

11. Fixierter Lebensmittelbestandteil, der nach dem Verfahren nach Anspruch 1 erzeugt worden ist.

12. Trockenes Lebensmittel, das den fixierten Lebensmittelbestandteil nach Anspruch 11 enthält.

## Revendications

1. Procédé de fixation d'ingrédients alimentaires comprenant les opérations de:

(a) préparation d'une solution aqueuse contenant un sel comestible choisi dans le groupe composé des sels de magnésium d'acides monobasiques, dibasiques et tribasiques et de leurs combinaisons et d'au moins un ingrédient alimentaire soluble dans l'eau, dispersible dans l'eau ou émulsifiable dans l'eau; et

(b) séchage de ladite solution pour l'obtention d'un ingrédient alimentaire fixé sec.

2. Procédé selon la revendication 1, dans lequel on effectue le séchage par lyophilisation, séchage par pulvérisation ou séchage au tambour.

3. Procédé selon la revendication 1, dans lequel l'ingrédient alimentaire fixé sec contient au moins 10% en poids de sel de magnésium.

4. Procédé selon la revendication 1, dans lequel le rapport molaire magnésium/acide de la solution selon l'opération (a) est d'au moins 0,3/1.

5. Procédé selon la revendication 4, dans lequel le rapport molaire est de 0,4/1 à 1,5/1.

6. Procédé selon la revendication 1, dans lequel le magnésium constitue 4 à 30% du sel de magnésium.

7. Procédé selon la revendication 1, dans lequel l'ingrédient alimentaire comprend ou est un arôme volatil ou un renforçateur d'arôme volatil.

8. Procédé selon la revendication 1, dans lequel l'ingrédient alimentaire contient un colorant.

9. Procédé selon la revendication 1, dans lequel l'ingrédient alimentaire contient des solides de jus de fruit ou de légumes.

10. Procédé selon la revendication 1, dans lequel l'ingrédient alimentaire contient des glucides hydroscopiques.

11. Ingrédient alimentaire fixé préparé par le procédé selon la revendication 1.

12. Denrée alimentaire sèche contenant l'ingrédient alimentaire fixé selon la revendication 11.